# EUROPEAN PATENT APPLICATION

(11) **EP 4 239 757 A1**
(43) Date of publication of application: **06.09.2023**
(21) Application number: 22783850.5
(22) Date of filing: 16.03.2022
(51) Int. Cl.: H01M 10/52, H01M 4/13

(54) **BATTERY, AND METHOD AND DEVICE FOR INHIBITING BATTERY INFLATION**

(30) Priority: 06.04.2021 CN 202110365495
(71) Applicant: Contemporary Amperex Technology Co., Limited, Ningde, Fujian 352100 (CN)
(72) Inventor: HU, Bobing, Ningde, Fujian 352100 (CN); ZOU, Jieliang, Ningde, Fujian 352100 (CN); LIU, Chengyong, Ningde, Fujian 352100 (CN); FU, Jiawei, Ningde, Fujian 352100 (CN); HE, Xiaoning, Ningde, Fujian 352100 (CN); HUANG, Shengyuan, Ningde, Fujian 352100 (CN); ZHONG, Chengbin, Ningde, Fujian 352100 (CN)
(74) Representative: Behr, Wolfgang
(86) International application number: PCT/CN2022/081244
(87) International publication number: WO 2022/213781

(57) **Abstract**

This application provides a battery, and a method and apparatus for curbing battery gassing, and pertains to the field of battery technologies. The battery includes a battery housing, a positive electrode plate, a negative electrode plate, and a non-aqueous electrolyte. A gas reducer is disposed inside the battery housing, the gas reducer includes at least one of alkali metal and alkali metal alloy, and the gas reducer is in no contact with or in non-electrical contact with the negative electrode plate. The apparatus is provided with the foregoing battery. The method for curbing battery gassing includes disposing the gas reducer inside the battery housing, such that the gas reducer is in no contact with or in non-electrical contact with the negative electrode plate. Such battery features simple configuration, no limitation from gas scale effect, timely degassing, and high degassing capacity.

## Description

### CROSS-REFERENCE TO RELATED APPLICATIONS

This application claims priority to Chinese Patent Application No. 2021103654958, filed on April 6, 2021 and entitled "BATTERY, AND METHOD AND APPARATUS FOR CURBING BATTERY GASSING", which is incorporated herein by reference in its entirety.

### TECHNICAL FIELD

This application relates to the field of battery technologies, and in particular, to a battery, and a method and apparatus for curbing battery gassing.

### BACKGROUND

Secondary batteries have advantages such as long cycle life and environmental protection, and are widely applied in new energy industries. When a battery is working, a solid electrolyte film, formed on a surface of a negative electrode as a result of reduction by a non-aqueous electrolyte, partially decomposes to produce gas, and the non-aqueous electrolyte oxidizes on a surface of a positive electrode to also produce gas. On the one hand, these gases will lead to battery volume swelling, and flammable gases are included in these gases produced in the battery and cause safety risks to a certain extent. On the other hand, these gases dissolving in electrodes and the non-aqueous electrolyte will affect ion transmission and electron exchange in the non-aqueous electrolyte, degrading the cycling performance of the battery.

In some cases, the following two methods are mainly used to solve the battery gassing problem.

The first method is disposing a vent valve. When gas produced reaches a given amount, it is exhausted to an air pocket through the vent valve. However, the foregoing method will complicate the structure of a battery and cannot eliminate the produced gas in a timely manner.

The second method is disposing a gas storage apparatus inside the battery, and the gas produced is absorbed and stored in the gas storage apparatus. In the foregoing method, however, an absorption medium with a specific size effect can absorb only a particular type of gas, and the amount of absorption and storage is relatively small.

### SUMMARY

This application is intended to provide a battery, and a method and apparatus for curbing battery gassing. In this application, a gas reducer is used for chemical consumption of gas produced, which helps achieve simple configuration, no limitation from gas scale effect, timely degassing, and high degassing capacity.

According to a first aspect, an embodiment of this application provides a battery, including a battery housing, a positive electrode plate, a negative electrode plate, and a non-aqueous electrolyte. A gas reducer is disposed inside the battery housing, the gas reducer includes at least one of alkali metal and alkali metal alloy, and the gas reducer is in no contact with or in non-electrical contact with the negative electrode plate.

In the technical solution according to this embodiment of this application, the gas reducer is disposed inside the battery housing, which is easy to implement. Alkali metal and/or alkali metal alloy is selected as the gas reducer. The gas produced is reduced to an alkali metal salt relying on reducibility of the alkali metal and the alkali metal alloy, implementing chemical consumption of the gas. Such chemical consumption is not limited by gas size effect. In addition, because of strong reducibility of the alkali metal and the alkali metal alloy, multiple types of gas produced can be reduced in a quick and effective manner to achieve timely degassing and high degassing capacity.

In some embodiments, an amount of substance of the gas reducer is 1-10% of an amount of substance of a solvent of the non-aqueous electrolyte, optionally 3-5%. In this design, a molar ratio of the gas reducer to the solvent of the non-aqueous electrolyte is controlled to be within a specified range. In this way, effects of absorbing gas produced by the battery are ensured, and frequent side reactions between excessive gas reducer and the electrolyte can be avoided.

In some embodiments, a specific surface area of the gas reducer is 5-100m²/g, optionally 20-50m²/g. In this design, the specific surface area of the gas reducer is controlled to be within a specified range, ensuring that gas produced during battery cycling can be absorbed quickly, and avoiding a large specific surface area which causes serious side reactions between the gas reducer and the electrolyte.

In some embodiments, the gas reducer is lithium metal or sodium metal. In this design, a specified type of gas reducer is selected. In this way, chemical consumption of multiple types of gas produced such as carbon monoxide, carbon dioxide, sulfur dioxide, sulfur trioxide, and nitrogen can be effectively implemented.

In some embodiments, the gas reducer is disposed on a positive electrode current collector of the positive electrode plate. In this design, the gas reducer is disposed on the positive electrode current collector, so that the gas reducer can be electrically insulated from the negative electrode plate properly.

In some embodiments, the positive electrode current collector of the positive electrode plate at an end of a battery cell has a first surface and a second surface that are opposite, a positive-electrode material is disposed on the first surface, and the gas reducer is disposed on the second surface. In this design, the gas reducer is disposed at the end of the battery cell, ensuring that the gas reducer can better contact and absorb the gas produced.

In some embodiments, the gas reducer is disposed on an inner wall of the battery housing. In this design, the gas reducer is disposed on the inner wall of the battery housing. The gas reducer is relatively fixed in the battery and therefore physical stability of a battery structure is improved.

In some embodiments, the battery housing includes a battery cell compartment and an air pocket compartment that communicate with each other, the positive electrode plate and the negative electrode plate are disposed in the battery cell compartment, and the gas reducer is disposed on the inner wall of the housing of the battery cell compartment and/or the inner wall of the housing of the air pocket compartment. In this design, the gas reducer is attached to the inner wall of the housing, so that the gas reducer is relatively fixed in the battery. Disposing the gas reducer in the air pocket compartment is convenient, allowing the gas reducer to be electrically insulated from the negative electrode plate properly.

In some embodiments, the gas reducer is sheet-shaped. In this design, the gas reducer is sheet-shaped, so that it is easy to attach the gas reducer to the battery cell and the battery housing.

In some embodiments, the battery is a pouch battery, a prismatic battery, a button battery, or a cylindrical battery.

In some embodiments, the solvent of the non-aqueous electrolyte is a carbonate-based solvent, optionally a fluorocarbonate-based solvent. In this design, the solvent of the non-aqueous electrolyte is a carbonate-based solvent, and with a main component of CO₂, gas produced by the electrolyte is highly active in reaction with the alkali metal gas reducer, ensuring that the gas reducer can better absorb the gas. When the non-aqueous electrolyte is a fluorocarbonate-based electrolyte, a more stable surface passivation layer can be formed on a surface of the alkali metal gas reducer, reducing side reactions between the gas reducer and the electrolyte.

In some embodiments, the battery is a lithium-ion battery or a sodium-ion battery.

In some embodiments, the positive-electrode material of the positive electrode plate is a ternary positive-electrode material, lithium iron phosphate, sodium iron phosphate, or lithium cobalt oxide, and/or a negative-electrode material of the negative electrode plate is lithium metal, sodium metal, or graphite.

In some embodiments, the positive-electrode material of the battery is lithium nickel cobalt manganate or lithium nickel cobalt aluminate, and the negative-electrode material of the battery is lithium metal.

According to a second aspect, an embodiment of this application provides an apparatus, provided with the battery according to the embodiments of the first aspect.

According to a third aspect, an embodiment of this application provides a method for curbing battery gassing. The method includes: disposing a gas reducer inside a battery housing, where the gas reducer is in no contact with or in non-electrical contact with a negative electrode plate, and the gas reducer includes at least one of alkali metal and alkali metal alloy.

In some embodiments, a positive-electrode material is disposed on a first surface of a positive electrode current collector and the gas reducer is disposed on a second surface to obtain a positive electrode plate; and the positive electrode plate is disposed at an end of a battery cell. In this design, the gas reducer is disposed on the positive electrode current collector, so that the gas reducer can be electrically insulated from the negative electrode plate properly.

In some embodiments, the gas reducer is formed on the positive electrode current collector in a roll-pressing manner. In this design, the gas reducer is formed in a roll-pressing manner so that it can be attached easily.

### BRIEF DESCRIPTION OF DRAWINGS

In order to describe the technical solutions in the embodiments of this application more clearly, the following briefly describes the accompanying drawings required for describing the embodiments. It should be appreciated that, the accompanying drawings below only show some embodiments of this application, and thus should not be considered as a limitation to the scope. A person of ordinary skill in the art may still derive other related drawings from the accompanying drawings without creative efforts.
FIG. 1 is a schematic diagram of a cell structure of the first type of laminated battery according to an embodiment of this application;
FIG. 2 is a schematic diagram of a cell structure of the first type of wound battery according to an embodiment of this application;
FIG. 3 is a schematic diagram of a cell structure of the second type of laminated battery according to an embodiment of this application;
FIG. 4 is a schematic diagram of a cell structure of the second type of wound battery according to an embodiment of this application;
FIG. 5 is a schematic structural diagram of a first type of battery according to an embodiment of this application;
FIG. 6 is a schematic structural diagram of a second type of battery according to an embodiment of this application;
FIG. 7 is a schematic structural diagram of a third type of battery according to an embodiment of this application; and
FIG. 8 is a schematic structural diagram of a fourth type of battery according to an embodiment of this application.

### Signs:

11: positive electrode plate; 12: negative electrode plate; 13: separator; 14: gas reducer; 15: insulator; 16: battery cell compartment; 17: air pocket compartment.

### DESCRIPTION OF EMBODIMENTS

To make the objectives, technical solutions, and advantages of embodiments of this application clearer, the following clearly and completely describes the technical solutions in the embodiments of this application. Embodiments, where specific conditions are not specified, are implemented in accordance with general conditions or those recommended by a manufacturer. The reagents or instruments used are all conventional products that can be purchased on the market if no manufacturer is indicated.

It should be noted that "and/or" in this application may be explained in three ways. For example, "solution A and/or solution B", may be solution A alone, solution B alone, or solution A and solution B together.

In addition, in the descriptions of this application, "a plurality of" means at least two.

The following describes in detail the battery, and the method and apparatus for curbing battery gassing according to the embodiments of this application.

A metal or an alloy with strong reducibility has strong chemical reactivity. When used in a battery, the metal or the alloy may react with the electrolyte directly and be consumed. Therefore, in some cases, generally a vent valve is used for degassing and a gas storage apparatus is used for gas storage, so as to eliminate gas in a physical manner. However, neither of the two foregoing methods can eliminate the produced gas. In addition, in a manner of using a gas storage apparatus to adsorb and store the gas produced, the gas storage apparatus generally needs to be separated from a non-aqueous electrolyte, so as to avoid corrosion and other impacts on the gas storage apparatus by the non-aqueous electrolyte.

Researches found that alkali metal and alkali metal alloy have strong reducibility, and they can quickly and effectively reduce multiple types of gas produced in a battery and generate alkali metal salts. Although alkali metal and alkali metal alloy have strong chemical reactivity, a passivation layer will be formed on their surfaces when they are in the non-aqueous electrolyte. The passivation layer formed can prevent a further reaction between a gas reducer and the non-aqueous electrolyte, avoiding reaction consumption without affecting chemical consumption of gas by the gas reducer. Therefore, when alkali metal or alkali metal alloy is used as the gas reducer in a battery using a non-aqueous electrolyte, surfaces of the alkali metal and the alkali metal alloy can be passivated by the non-aqueous electrolyte for stable preservation, so that multiple types of gas produced in the battery can be chemically consumed quickly and effectively relying on strong reducibility of the alkali metal and the alkali metal alloy.

According to a first aspect, an embodiment of this application provides a battery, including a battery housing, a positive electrode plate, a negative electrode plate, and a non-aqueous electrolyte. A gas reducer is disposed inside the battery housing, the gas reducer includes at least one of alkali metal and alkali metal alloy, and the gas reducer is in no contact with or in non-electrical contact with the negative electrode plate.

In the embodiment of this application, the gas reducer only needs to be disposed in a position in no contact with or in non-electrical contact with the negative electrode plate, so as to ensure that strong reducibility of the gas reducer can be exerted. In addition, considering that the non-aqueous electrolyte can passivate the surface of the gas reducer, it is unnecessary to separate the gas reducer from the non-aqueous electrolyte. This simplifies battery structure configuration.

During use of the battery, multiple types of gas produced in the battery can be chemically consumed quickly relying on the strong reducibility of the gas reducer. In addition, such chemical consumption allows a small amount of the gas reducer to consume a large amount of gas. On the one hand, battery volume swelling can be effectively relieved. On the other hand, the amount of produced gas dissolved at the electrodes and in the non-aqueous electrolyte can be reduced, improving ion transmission and electron exchange in the non-aqueous electrolyte and upgrading the cycling performance of the battery.

By means of chemical reaction, the gas produced in the battery can be chemically eliminated, significantly improving safety performance of the battery. The gas reducer reduces the produced gas to alkali metal salts, without affecting the function of the non-aqueous electrolyte.

Regarding the battery type: in this application, chemical consumption of gas can be performed effectively only if the gas reducer is disposed in a position in no contact with or in non-electrical contact with the negative electrode plate during battery configuration. Therefore, the battery is not specifically limited in terms of type (for example, the non-aqueous electrolyte system of the battery, packaging type of the battery, and electrochemical systems used by the electrodes of the battery) in the embodiment of this application, and can be selected from known batteries in this application as long as a non-aqueous electrolyte of the battery has the gas production problem.

Batteries are categorized based on the non-aqueous electrolyte system. For example, the non-aqueous electrolyte of the battery may be not limited to ester-based non-aqueous electrolyte, ether-based non-aqueous electrolyte, or sulfone-based non-aqueous electrolyte.

Through research, the inventors found that CO₂ is a main component of gas produced by a carbonate-based electrolyte and CO₂ is highly active in reaction with the alkali metal gas reducer. For example, the non-aqueous electrolyte of the battery uses a carbonate-based solvent, further improving battery cycling performance by the gas reducer greatly.

Through further research, the inventors found that a more stable surface passivation layer can be formed on a surface of the alkali metal gas reducer when the non-aqueous electrolyte of the battery is a fluorocarbonate-based electrolyte. Furthermore, when the non-aqueous electrolyte of the battery uses a fluorocarbonate-based solvent, side reactions between the gas reducer and the electrolyte can be reduced, thereby dramatically improving the cycling performance of the battery.

It should be noted that in this application, the ester-based electrolyte is a non-aqueous electrolyte that uses an ester-based solvent unsubstituted with fluorin, and the fluoroester-based electrolyte is a non-aqueous electrolyte that uses a fluoroester solvent.

It can be understood that in the embodiment of this application, the electrolyte may include an organic solvent and an electrolyte salt dissolved in the organic solvent. The electrolyte salt is generally a lithium salt, for example, an inorganic lithium salt such as LiClO₄, LiPF₆, LiBF4, LiAsF₆, and LiSbF₆, or an organic lithium salt such as LiCF³SO₃, LiCF₃CO₂, Li₂C₂F₄ (SO₃) ₂, LiN (CF₃SO₂) ₂, LiC (CF₃SO₂) ₃, and LiCnF₂ₙ₊₁SO₃ (n ≤ 2).

When categorized based on the packaging type, the battery is, for example without limitation, a pouch battery, a prismatic battery, a button battery, or a cylindrical battery. For example, based on different disposition manners of electrode plates, the pouch battery or prismatic battery may be a laminated battery or a wound battery.

When categorized based on the electrochemical system of the battery, the battery is, for example without limitation, a lithium-ion battery or a sodium-ion battery. Optionally, the positive-electrode material of the positive electrode plate is a ternary positive-electrode material, lithium iron phosphate, sodium iron phosphate, or lithium cobalt oxide, and a negative-electrode material of the negative electrode plate is lithium metal, sodium metal, or graphite.

For example, the positive-electrode material of the battery is lithium nickel cobalt manganate or lithium nickel cobalt aluminate, and the negative-electrode material of the battery is lithium metal. The foregoing types of lithium-ion batteries feature high specific energy density, and research has revealed that using the alkali metal and alkali metal alloy as the gas reducer in the foregoing types of lithium-ion batteries can enhance gas consumption and therefore effectively improve the battery cycling performance.

### Regarding types of the gas reducer:

In the embodiment of this application, for example, the alkali metal may be lithium metal, sodium metal, potassium metal or rubidium metal, and the alkali metal alloy may be lithium silicon alloy, lithium aluminum alloy, lithium tin alloy, lithium boron alloy, lithium magnesium alloy, sodium antimony alloy, sodium phosphorus alloy, sodium bismuth alloy, sodium silicon alloy, potassium sodium alloy, lithium sodium alloy or lithium potassium alloy. The type of the gas reducer is not limited and can be selected based on the type of the gas produced by the battery. For example, the gas reducer may be one or at least two of the foregoing alkali metals and/or alkali metal alloys.

For example, the gas reducer is lithium metal or sodium metal. In this case, the gas reducer can implement chemical consumption effectively on multiple types of gas produced in the battery such as carbon monoxide, carbon dioxide, sulfur dioxide, sulfur trioxide, and nitrogen.

In different battery systems, gas production differs due to impact from factors such as the non-aqueous electrolyte system and the electrochemical systems of electrodes. In addition, different gas reducers have different gas consumption effects. A specific combination of the non-aqueous electrolyte system, the electrochemical system of the electrodes and the type of gas reducer can ensure adequate chemical consumption of the gas produced.

For example, the positive-electrode material is lithium nickel cobalt manganate, the gas reducer is one or more of alkali metal (for example, lithium metal, sodium metal, or potassium metal) or alkali metal alloy (for example, lithium magnesium alloy or sodium tin alloy), and the non-aqueous electrolyte is ester-based non-aqueous electrolyte, ether-based non-aqueous electrolyte, or sulfone-based non-aqueous electrolyte.

For another example, the positive-electrode material is lithium iron phosphate, lithium cobaltate or sodium iron phosphate, or lithium nickel cobalt aluminate, the gas reducer is alkali metal (for example, lithium metal, sodium metal, or potassium metal), and the non-aqueous electrolyte is ester-based non-aqueous electrolyte.

### Regarding the manner of disposing the gas reducer:

In the embodiment of this application, the position where the gas reducer is disposed is not limited as long as it is in contact with the gas produced in the battery and it is in no contact with or in non-electrical contact with the negative electrode plate. It should be noted that in the embodiment of this application: considering that the non-aqueous electrolyte can passivate the surface of the gas reducer specified in this application, it is unnecessary to separate the gas reducer from the non-aqueous electrolyte. This means that it is not mandatory to separate the gas reducer from the non-aqueous electrolyte. It can be understood that for the battery according to this application, the manner of disposing the gas reducer is not limited to making the gas reducer be in contact with the non-aqueous electrolyte. For example, the gas reducer may alternatively be enclosed in a separation chamber through which gas can pass but the electrolyte cannot.

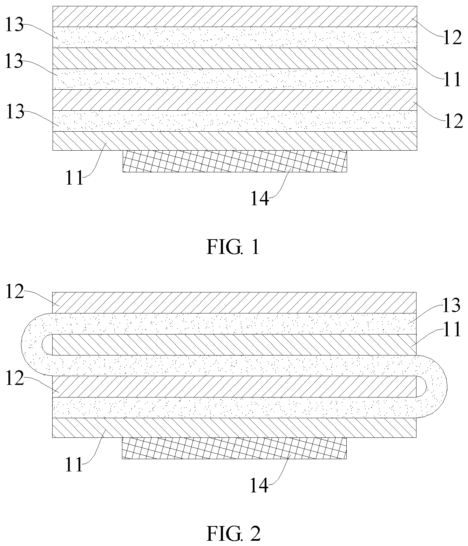

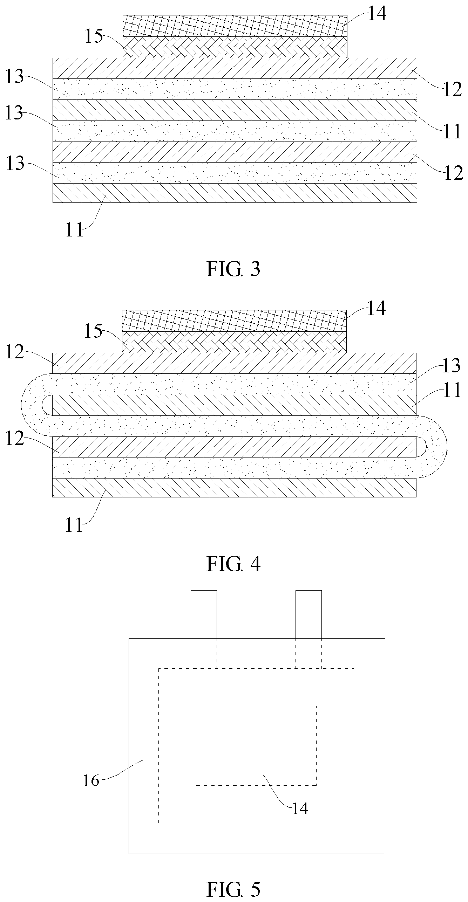

In implementations of the gas reducer being directly disposed in the battery, for example, the gas reducer is attached to a battery cell, or attached to an inner wall of the battery housing, or is movably disposed inside the battery housing. In a manner of the gas reducer being attached to the inner wall of the battery housing or being movably disposed inside the battery housing, the gas reducer is in no contact with the negative electrode plate. FIG. 1 and FIG. 2 show examples of attaching the gas reducer to the battery cell. FIG. 1 shows a cell structure of a laminated battery, and FIG. 2 shows a cell structure of a wound battery. The gas reducer 14 is disposed on a side where the positive electrode plate 11 is located, so that the gas reducer 14 is in no contact with the negative electrode plate 12. FIG. 3 and FIG. 4 show another examples of attaching the gas reducer to the battery cell. FIG. 3 shows a cell structure of another laminated battery, and FIG. 4 shows a cell structure of another wound battery. The gas reducer 14 is disposed on a side where the negative electrode plate 12 is located, and an insulator 15 is disposed to make the gas reducer 14 be indirectly connected to the negative electrode plate 12, that is, be in non-electrical contact with the negative electrode plate 12.

In a manner of attaching the gas reducer 14 to the battery cell or to the inner wall of the battery housing, the gas reducer 14 is relatively fixed in the battery, and physical stability of the battery structure is improved. Optionally, the gas reducer 14 may be attached to the battery cell and/or attached to the inner wall of the battery housing.

In a manner of attaching the gas reducer 14 to the battery cell, the gas reducer 14 is optionally disposed on an electrode plate at an end of the battery cell. Further, an electrode active material of the electrode plate at the end is disposed on a surface, close to a separator 13, of a current collector; and the gas reducer 14 is disposed on a surface, away from the separator 13, of the current collector of the electrode plate at the end. The foregoing manners of attaching the gas reducer 14 allow the gas reducer 14 to be in proper contact with the gas produced in the battery.

It should be noted that in the battery cell, the positive electrode plate 11 is separated from the negative electrode plate 12 by the separator 13. Regarding the positive electrode plate 11 at an end of the battery in this application: as shown in FIG. 1 and FIG. 3, in the laminated battery, the positive electrode plate 11 and the negative electrode plate 12 are stacked in sequence, and the positive electrode plate 11 located on the outermost side after lamination is the positive electrode plate 11 located at the end of the battery cell in this application. As shown in FIG. 2 and FIG. 4, in the wound battery, the positive electrode plate 11 and the negative electrode plate 12 are stacked in sequence and then wound, and the positive electrode plate 11 located on the outermost side at the end after winding is the positive electrode plate 11 located at the end of the battery cell in this application. Likewise, the negative electrode plate 12 at an end of the battery cell can be determined by referring to the foregoing explanation, and details are not described herein again.

As shown in FIG. 1 and FIG. 2, for example, the gas reducer 14 is disposed on a positive electrode current collector of the positive electrode plate 11, being electrically insulated from the negative electrode plate 12 properly. Optionally, the gas reducer 14 is disposed on a positive electrode current collector of the positive electrode plate 11 at the end of the battery cell.

For example, the positive electrode current collector of the positive electrode plate 11 at the end of the battery cell has a first surface and a second surface that are opposite. The first surface is a surface of the positive electrode current collector close to the separator 13, and the first surface is provided with a positive-electrode material. The second surface is a surface of the positive electrode current collector away from the separator 13, and the gas reducer 14 is disposed on the second surface.

In a manner of the gas reducer 14 being attached to the inner wall of the battery housing, in an example implementation, the battery housing has only one accommodating cavity. For example, the battery is a pouch battery, a prismatic battery, a button battery, or a cylindrical battery. In this manner of disposition, the gas reducer 14 is attached to the inner wall of the housing, which encloses the accommodating cavity. In a second example implementation, the battery housing includes a battery cell compartment 16 and an air pocket compartment 17 that communicate with each other. For example, the battery is a pouch battery, and the battery cell that has the positive electrode plate 11 and the negative electrode plate 12 is disposed in the battery cell compartment 16. In this manner of disposition, the gas reducer 14 is disposed on the inner wall of the housing of the battery cell compartment 16 and/or the inner wall of the housing of the air pocket compartment 17.

In the embodiment of this application, the shape of the gas reducer 14 is not limited, and, for example, the gas reducer 14 may be sheet-shaped, block-shaped, or granular. It can be understood that in the embodiment of this application the gas reducer 14 may be disposed in the battery based on the shape of the gas reducer 14. For example, under the condition that the gas reducer 14 is sheet-shaped, the gas reducer 14 is optionally attached to the battery cell and/or the inner wall of the battery housing; under the condition that the gas reducer 14 is block-shaped or granular, optionally the gas reducer 14 is movably disposed inside the battery housing.

For example, under the condition that the gas reducer 14 is sheet-shaped, the gas reducer 14 can be fixedly disposed in the battery in a convenient manner of being attached to the battery cell and/or the inner wall of the battery housing.

In the implementation in which the sheet-shaped gas reducer 14 is attached to the battery cell and/or the inner wall of the battery housing, the gas reducer 14 may not be attached only to the battery cell structure or only to the inner wall of the battery housing, and the gas reducer 14 may be attached to both the inner wall of the battery housing and the battery cell. In the implementation in which the gas reducer 14 is disposed on the inner wall of the housing, the gas reducer 14 may not be disposed only on the inner wall of the housing of the battery cell compartment 16 or attached only to the inner wall of the housing in the air pocket compartment 17, and the gas reducer 14 may be attached to both the inner wall of the housing of the battery cell compartment 16 and the inner wall of the housing of the air pocket compartment 17.

Referring to FIG. 5, for example, the battery housing has only one accommodation cavity used as the battery cell compartment 16, and the sheet-shaped gas reducer 14 is attached to the battery cell or attached to the inner wall of the housing of the battery cell compartment 16. For example, the sheet-shaped gas reducer 14 is attached to the battery cell.

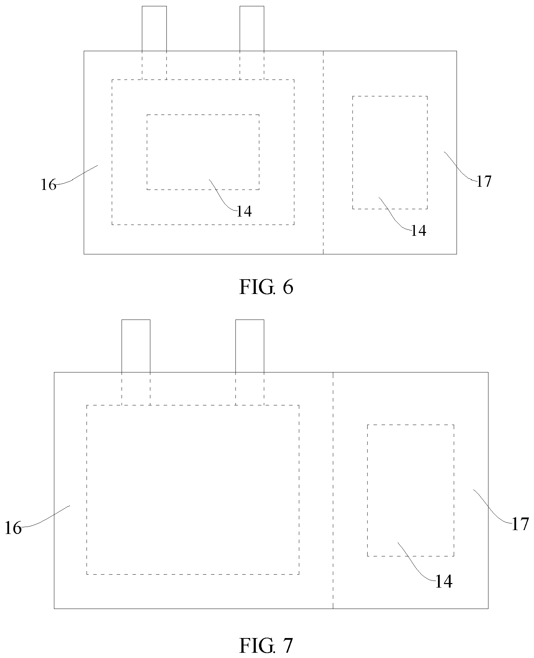

Referring to FIG. 6, for another example, the battery housing includes the battery cell compartment 16 and the air pocket compartment 17 that communicate with each other, and the sheet-shaped gas reducer 14 is disposed both in the battery housing and the air pocket compartment 17. In the air pocket compartment 17, the sheet-shaped gas reducer 14 is attached to the inner wall of the housing of the air pocket compartment 17. In the battery cell compartment 16, the sheet-shaped gas reducer 14 is attached to the battery cell or attached to the inner wall of the housing of the battery cell compartment 16. For example, the sheet-shaped gas reducer 14 is attached to the battery cell.

Referring to FIG. 7, for still another example, the battery housing includes the battery cell compartment 16 and the air pocket compartment 17 that communicate with each other, and the sheet-shaped gas reducer 14 is disposed only in the air pocket compartment 17. In the air pocket compartment 17, the sheet-shaped gas reducer 14 is attached to the inner wall of the housing of the air pocket compartment 17.

In a manner of the gas reducer 14 being attached to the inner wall of the battery housing, optionally the gas reducer 14 is bound to the inner wall of the battery housing by using a binder. In a manner of the gas reducer 14 being attached to the battery cell, optionally, the gas reducer 14 is bound to the positive electrode current collector of the positive electrode plate 11 by using a binder, or the gas reducer 14 is formed on the positive electrode current collector of the positive electrode plate 11 in a roll-pressing manner. No binder is required in the roll-pressing manner, which simplifies disposition of the gas reducer 14.

In some example implementations, the sheet-shaped gas reducer 14 is disposed only on the positive electrode current collector of the positive electrode plate 11 at the end of the battery cell, and is formed on the second surface of the positive electrode current collector in a roll-pressing manner.

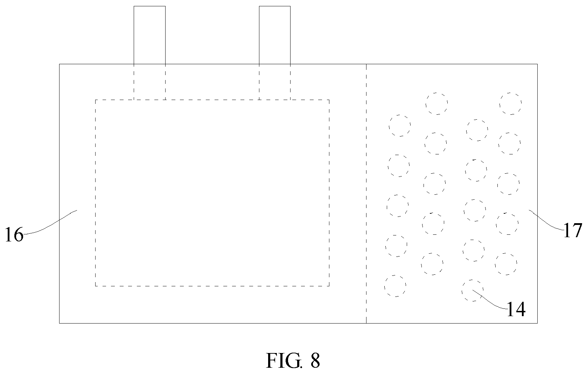

In an implementation in which the block-shaped or granular gas reducer 14 is movably disposed in the battery housing, referring to FIG. 8, for still another example, the gas reducer 14 is block-shaped or granular, the battery housing includes the battery cell compartment 16 and the air pocket compartment 17 that communicate with each other, and the gas reducer 14 is disposed only in the air pocket compartment 17, and the gas reducer 14 is movable in the air pocket compartment 17.

The inventors also found that, for the battery using the non-aqueous electrolyte system of this application, a specific surface area of the gas reducer is also closely related to the battery cycling performance. Under the condition that the specific surface area of the gas reducer is excessively low, its active area for reaction will be small. This is not conducive to rapid absorption of the gas produced during battery cycling, and the passivated surface will further hinder the absorption of the gas reducer. Under the condition that the specific surface area of the gas reducer is excessively high, serious side reactions will occur between the gas reducer and the electrolyte. On the one hand, a large amount of the gas reducer will be consumed during surface passivation, and therefore the gas produced cannot be effectively absorbed. On the other hand, part of the electrolyte will also be consumed during the side reactions, significantly degrading the battery cycling performance.

For example, the specific surface area of the gas reducer is 5-100 square meters per gram (m²/g), optionally any point value of 5m²/g, 10m²/g, 20m²/g, 30m²/g, 40m²/g, 50m²/g, 60m²/g, 70m²/g, 80m²/g, 90m²/g, and 100m²/g or in a range between any two values thereof, for example, 20-50m²/g.

In the foregoing technical solution, a surface area of the gas reducer 14 will affect its passivation area and consumption in the non-aqueous electrolyte, and the surface area of the gas reducer 14 will affect the contact with and chemical consumption of the gas produced by the battery. Controlling the surface area of the gas reducer 14 to be a specified proportion in the battery can avoid excessive passivation and consumption of the gas reducer 14 and ensure that the gas reducer 14 can quickly react with and consume the gas produced by the battery.

In some example implementations, for example, in a manner of the sheet-shaped gas reducer 14 being disposed only on the positive electrode current collector of the positive electrode plate 11 at the end of the battery cell, a proportion of the area of the sheet-shaped gas reducer 14 to a battery size (an area of one side of the current collector) is 35-45:60 or 38-42:60, for example, 50:60.

Further, the inventors found that the gas produced by the battery mainly derives from decomposition of the electrolyte. Therefore, in the battery using the non-aqueous electrolyte system in this application, a molar ratio of the gas reducer to the solvent of the non-aqueous electrolyte significantly affects the battery cycling performance. In view of this, the gas reducer can be specified by adjusting the addition amount of the electrolyte. Under the condition that an amount of substance of the gas reducer is relatively small, due to low content of the gas reducer, the effect of absorbing the gas produced by the battery is limited, and therefore the battery cycling performance is not significantly improved. Under the condition that the amount of substance of the gas reducer is relatively larger, frequent side reactions will occur between such a large amount of reducer and the electrolyte, resulting in excessive loss of the electrolyte and thereby degrading the battery cycling performance.

For example, the amount of substance of the gas reducer is 1-10% of the amount of substance of the solvent of the non-aqueous electrolyte, optionally any point value of 1%, 2%, 3%, 4%, 5%, 6%, 7%, 8%, 9%, and 10% or in a range between any two values thereof, for example, 3-5%.

In the foregoing technical solution, considering impact of the amount of the gas reducer 14 on a total amount of gas consumed, an appropriate amount of the gas reducer 14 should be used. This helps ensure the gas to be fully absorbed by the battery through reaction when the battery is working, and avoids excessive consumption of the electrolyte due to passivation of the reducer.

In some embodiments, the batteries provided in this application may be assembled into a battery module. The battery module may include a plurality of such batteries, and a specific quantity may be adjusted based on application and capacity of the battery module.

The foregoing battery modules may be further assembled into a battery pack, and a quantity of such battery modules included in the battery pack may be adjusted based on application and capacity of the battery pack.

According to a second aspect, an embodiment of this application provides an apparatus, provided with the battery according to the embodiments of the first aspect. The battery supplies power for the apparatus.

In the embodiment of this application, the apparatus may be, but is not limited to, a mobile communication terminal (for example, a mobile phone, a notebook computer, a tablet computer, a POS terminal, and an in-vehicle computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

It can be understood that the apparatus may be equipped with the battery provided in this application based on needs, or equipped with the battery module or the battery pack assembled from the batteries provided in this application.

According to a third aspect, an embodiment of this application provides a method for curbing battery gassing. The method includes: disposing a gas reducer 14 inside a battery housing, where the gas reducer 14 is in no contact with or in non-electrical contact with a negative electrode plate 12; and the gas reducer 14 includes at least one of alkali metal and alkali metal alloy. Regarding the type of the battery, the type of the gas reducer 14, and disposition of the gas reducer 14, refer to the embodiment provided in the first aspect. Details are not described herein again.

For example, a positive-electrode material is disposed on a first surface of a positive electrode current collector and the gas reducer 14 is disposed on a second surface to obtain a positive electrode plate 11; and the positive electrode plate 11 is disposed at an end of a battery cell. Optionally, in the foregoing implementation, the gas reducer 14 is formed on the positive electrode current collector in a roll-pressing manner, so that the gas reducer 14 can be easily attached in the battery.

It can be understood that in the embodiment of this application, the operation method and operation time for attaching the gas reducer 14 in the battery are not subject to particular limitations. Regarding the operation method, apart from the rolling-pressing manner, a binder may also be used for binding. Regarding the operation time, when a binder is used for binding, first electrode plates are stacked or wound into a battery cell, and then the gas reducer 14 is bound to the positive electrode current collector of the positive electrode plate 11; alternatively, first the gas reducer 14 is bound to the positive electrode current collector of the positive electrode plate 11, and then the electrode plates are stacked or wound into a battery cell.

In a preparation method of the battery according to this application, the housing to which the gas reducer 14 is attached, the housing on which the gas reducer 14 is movably disposed, the positive electrode plate 11 to which the gas reducer is attached, or the negative electrode plate 12 with which the gas reducer is in non-electrical connection is prepared first; the positive electrode plate 11, a separator 13, and the negative electrode plate 12 are assembled in sequence by using a method known in the art to obtain a battery cell; the battery cell is put into the housing; after drying, electrolyte is injected; and a battery is obtained after processes such as vacuum packaging, standing, formation, and shaping.

In a preparation method of the battery according to this application, the positive electrode plate 11, the separator 13, and the negative electrode plate 12 are assembled in sequence by using a method known in the art to obtain the battery cell; the gas reducer 14 is attached to an outer side of the positive electrode current collector of the positive electrode plate 11 at an end of the battery cell, or the gas reducer 14 is non-electrically connected to an outer side of a negative electrode current collector of the negative electrode plate 12 at an end of the cell through an insulator 15; the battery cell is put into the housing; after drying, electrolyte is injected; and the battery is obtained after processes such as vacuum packaging, standing, formation, and shaping.

The following further describes in detail this application in terms of characteristics and performance with reference to the embodiments.

### Examples and comparative examples

Each example and comparative example provide a battery, in which a positive electrode plate whose surface load is 4 milliampere hours per square centimeter (mAh cm⁻²) is paired with different types of negative electrode plates.

Table 1 shows the positive-electrode material, the negative-electrode material, the battery packaging type, and disposition of the gas reducer of each battery. In the examples and comparative examples, if no air pocket is mentioned, it means no air pocket is configured.

In the examples and comparative examples, pouch batteries and prismatic batteries are laminated batteries with an overall size of 60cm² and an active area of 40cm². The pouch batteries are model 4060D0 batteries, the prismatic batteries are model 043048 batteries, button batteries are model 2032 batteries, and cylindrical batteries are model 18650 batteries.

### Test case

The cycling performance of the battery provided by each example and comparative example was tested. The cycling performance is the number of cycles when the discharge capacity of the battery reaches 80% of the initial capacity, and the results are shown in Table 1.

Test conditions: The design capacity of the batteries was 140 milliampere hours (mAh), the test temperature was 25 degrees Celsius (°C), and three lithium-ion battery samples were taken for each embodiment and comparative example. Each lithium-ion battery was charged at a constant current of 1/3C from the initial voltage of the battery to 4.3 volts (V), charged at a constant voltage of 4.3V to a current of 0.05C, and then discharged at a constant current of 1/3C to 2.8V to complete a charge and discharge cycle. Charging and discharging were performed as such repeatedly.

**Table 1. Battery structures and test results**

| | Positive-electrode material | Negative-electrode material | Type of non-aqueous electrolyte | Battery packaging type | Gas reducer | | | | Cycling performance |
|---|---|---|---|---|---|---|---|---|---|
| | | | | | Position | Type and form | Molar ratio (%) | Specific surface area (m²/g) | |
| Example 1 | Lithium nickel cobalt manganate | Lithium metal | Ester-based non-aqueous electrolyte | Pouch battery | Inner wall of battery | Lithium sheet | 1 | 5 | 158 |
| Example 2 | Lithium nickel cobalt aluminate | Lithium metal | Ester-based non-aqueous electrolyte | Pouch battery | Inner wall of battery | Lithium sheet | 1 | 5 | 154 |
| Example 3 | Lithium nickel cobalt manganate | Lithium metal | Ester-based non-aqueous electrolyte | Pouch battery | Inner wall of battery | Sodium sheet | 1 | 5 | 156 |
| Example 4 | Lithium nickel cobalt aluminate | Lithium metal | Ester-based non-aqueous electrolyte | Pouch battery | Inner wall of battery | Sodium sheet | 1 | 5 | 155 |
| Example 5 | Lithium nickel cobalt manganate | Lithium metal | Ester-based non-aqueous electrolyte | Pouch battery | Inner wall of battery | Potassium sheet | 1 | 5 | 156 |
| Example 6 | Lithium nickel cobalt aluminate | Lithium metal | Ester-based non-aqueous electrolyte | Pouch battery | Inner wall of battery | Potassium sheet | 1 | 5 | 159 |
| Example 7 | Lithium nickel cobalt manganate | Lithium metal | Ester-based non-aqueous electrolyte | Pouch battery | Inner wall of battery | Lithium magnesium alloy | 1 | 5 | 161 |
| Example 8 | Lithium nickel cobalt aluminate | Lithium metal | Ester-based non-aqueous electrolyte | Pouch battery | Inner wall of battery | Sodium tin alloy | 1 | 5 | 160 |
| Example 9 | Lithium iron phosphate | Lithium metal | Ester-based non-aqueous electrolyte | Pouch battery | Inner wall of battery | Lithium sheet | 1 | 5 | 223 |
| Example 10 | Lithium cobaltate | Lithium metal | Ester-based non-aqueous electrolyte | Pouch battery | Inner wall of battery | Lithium sheet | 1 | 5 | 157 |
| Example 11 | Sodium iron phosphate | Sodium metal | Ester-based non-aqueous electrolyte | Pouch battery | Inner wall of battery | Lithium sheet | 1 | 5 | 143 |
| Example 12 | Lithium nickel cobalt manganate | Graphite | Ester-based non-aqueous electrolyte | Pouch battery | Inner wall of battery | Lithium sheet | 1 | 5 | 865 |
| Example 13 | Lithium nickel cobalt aluminate | Graphite | Ester-based non-aqueous electrolyte | Pouch battery | Inner wall of battery | Lithium sheet | 1 | 5 | 860 |
| Example 14 | Lithium nickel cobalt manganate | Lithium metal | Ester-based non-aqueous electrolyte | Button battery | Inner wall of battery | Lithium sheet | 1 | 5 | 200 |
| Example 15 | Lithium nickel cobalt manganate | Lithium metal | Ester-based non-aqueous electrolyte | Cylindrical battery | Inner wall of battery | Lithium sheet | 1 | 5 | 165 |
| Example 16 | Lithium nickel cobalt manganate | Lithium metal | Ester-based non-aqueous electrolyte | Prismatic battery | Inner wall of battery | Lithium sheet | 1 | 5 | 162 |
| Example 17 | Lithium nickel cobalt manganate | Lithium metal | Ester-based non-aqueous electrolyte | Pouch battery | Positive electrode current collector | Lithium sheet | 1 | 5 | 159 |
| Example 18 | Lithium nickel cobalt manganate | Lithium metal | Ester-based non-aqueous electrolyte | Pouch battery | Air pocket | Lithium sheet | 1 | 5 | 158 |
| Example 19 | Lithium nickel cobalt manganate | Lithium metal | Ester-based non-aqueous electrolyte | Pouch battery | Positive electrode current collector | Lithium sheet | 1 | 5 | 245 |
| Example 20 | Lithium nickel cobalt manganate | Lithium metal | Ether-based non-aqueous electrolyte | Pouch battery | Inner wall of battery | Lithium sheet | 1 | 5 | 148 |
| Example 21 | Lithium nickel cobalt manganate | Lithium metal | Highly enriched sulfone-based non-aqueous electrolyte | Pouch battery | Inner wall of battery | Lithium sheet | 1 | 5 | 136 |
| Example 22 | Lithium nickel cobalt manganate | Lithium metal | Fluoroester-based non-aqueous electrolyte | Pouch battery | Inner wall of battery | Lithium sheet | 1 | 5 | 284 |
| Example 23 | Lithium nickel cobalt manganate | Lithium metal | Ester-based non-aqueous electrolyte | Pouch battery | Inner wall of battery | Lithium sheet | 0.2 | 5 | 100 |
| Example 24 | Lithium nickel cobalt manganate | Lithium metal | Ester-based non-aqueous electrolyte | Pouch battery | Inner wall of battery | Lithium sheet | 3 | 5 | 179 |
| Example 25 | Lithium nickel cobalt manganate | Lithium metal | Ester-based non-aqueous electrolyte | Pouch battery | Inner wall of battery | Lithium sheet | 5 | 5 | 184 |
| Example 26 | Lithium nickel cobalt manganate | Lithium metal | Ester-based non-aqueous electrolyte | Pouch battery | Inner wall of battery | Lithium sheet | 10 | 5 | 150 |
| Example 27 | Lithium nickel cobalt manganate | Lithium metal | Ester-based non-aqueous electrolyte | Pouch battery | Inner wall of battery | Lithium sheet | 20 | 5 | 126 |
| Example 28 | Lithium nickel cobalt manganate | Lithium metal | Ester-based non-aqueous electrolyte | Pouch battery | Inner wall of battery | Lithium sheet | 1 | 1 | 115 |
| Example 29 | Lithium nickel cobalt manganate | Lithium metal | Ester-based non-aqueous electrolyte | Pouch battery | Inner wall of battery | Lithium sheet | 1 | 20 | 171 |
| Example 30 | Lithium nickel cobalt manganate | Lithium metal | Ester-based non-aqueous electrolyte | Pouch battery | Inner wall of battery | Lithium sheet | 1 | 50 | 166 |
| Example 31 | Lithium nickel cobalt manganate | Lithium metal | Ester-based non-aqueous electrolyte | Pouch battery | Inner wall of battery | Lithium sheet | 1 | 100 | 148 |
| Example 32 | Lithium nickel cobalt manganate | Lithium metal | Ester-based non-aqueous electrolyte | Pouch battery | Inner wall of battery | Lithium sheet | 1 | 200 | 103 |
| Example 33 | Lithium nickel cobalt manganate | Lithium metal | Ester-based non-aqueous electrolyte | Prismatic battery | Inner wall of battery | Lithium sheet | 1 | 5 | 160 |
| Example 34 | Lithium nickel cobalt manganate | Lithium metal | Ester-based non-aqueous electrolyte | Button battery | Inner wall of battery | Lithium sheet | 1 | 5 | 165 |
| Example 35 | Lithium nickel cobalt manganate | Lithium metal | Ester-based non-aqueous electrolyte | Cylindrical battery | Inner wall of battery | Lithium sheet | 1 | 5 | 157 |
| Comparative example 1 | Lithium nickel cobalt manganate | Lithium metal | Ester-based non-aqueous electrolyte | Pouch battery | Not applicable | Not applicable | Not applicable | Not applicable | 96 |
| Comparative example 2 | Lithium nickel cobalt aluminate | Lithium metal | Ester-based non-aqueous electrolyte | Pouch battery | Not applicable | Not applicable | Not applicable | Not applicable | 91 |
| Comparative example 3 | Lithium nickel cobalt manganate | Graphite | Ester-based non-aqueous electrolyte | Pouch battery | Not applicable | Not applicable | Not applicable | Not applicable | 532 |
| Comparative example 4 | Lithium nickel cobalt manganate | Lithium metal | Ester-based non-aqueous electrolyte | Pouch battery | Inner wall of battery | Molecular sieve | Not applicable | 300 | 106 |
| Comparative example 5 | Lithium nickel cobalt manganate | Lithium metal | Ether-based non-aqueous electrolyte | Pouch battery | Inner wall of battery | Not applicable | Not applicable | Not applicable | 125 |
| Comparative example 6 | Lithium nickel cobalt manganate | Lithium metal | Highly enriched sulfone-based non-aqueous electrolyte | Pouch battery | Inner wall of battery | Not applicable | Not applicable | Not applicable | 101 |
| Comparative example 7 | Lithium nickel cobalt manganate | Lithium metal | Fluoroester-based non-aqueous electrolyte | Pouch battery | Inner wall of battery | Not applicable | Not applicable | Not applicable | 176 |

### Notes:

(1) The electrolytes of the same type in all examples and comparative examples in Table 1 are the same electrolyte.
   The ester-based non-aqueous electrolyte is a non-aqueous electrolyte that uses a carbonate-based solvent unsubstituted with fluorin, specifically ethylene carbonate containing 1 mol/L of lithium bisfluorosulfonimide. The fluoroester-based non-aqueous electrolyte is a non-aqueous electrolyte that use a fluorocarbonate-based solvent, specifically fluoroethylene carbonate containing 1 mole per liter (mol/L) of lithium bisfluorosulfonimide. The ether-based non-aqueous electrolyte is specifically ethylene glycol dimethyl ether containing 1 mol/L of lithium bisfluorosulfonimide, and the highly enriched sulfone-based non-aqueous electrolyte is specifically ethylene glycol dimethyl ether containing 3 mol/L of lithium bisfluorosulfonimide.
(2) The molar ratio of the gas reducer in Table 1 is a percentage of the amount of substance of the gas reducer relative to the amount of substance of the solvent of the non-aqueous electrolyte, that is, the molar ratio of the gas reducer = (the amount of substance of the gas reducer/the amount of substance of the solvent of the non-aqueous electrolyte)^{∗}100%.

According to Examples 1 to 8, it can be learned that in the embodiments of this application, different alkali metals and alkali metal alloys used as the gas reducer can all chemically consume the gas produced by a battery and help achieve good battery cycling performance.

According to Example 1 and Examples 9 to 13, it can be learned that in the embodiments of this application, under the condition that a specified gas reducer is provided in a battery using the non-aqueous electrolyte system, no matter which positive-electrode materials and negative-electrode materials are used, the gas reducer can chemically consume the gas produced by the battery and helps achieve good battery cycling performance.

According to Example 1 and Examples 14 to 16, it can be learned that in the embodiments of this application, under the condition that a specified gas reducer is provided in a battery using the non-aqueous electrolyte system, no matter which packaging type is used, the gas reducer can chemically consume the gas produced by the battery and helps achieve good battery cycling performance.

According to Example 1 and Examples 17 to 19, it can be learned that in the embodiments of this application, under the condition that a specified gas reducer is provided in a battery using the non-aqueous electrolyte system, no matter where the gas reducer is disposed inside the battery, the gas reducer can chemically consume the gas produced by the battery and helps achieve good battery cycling performance.

From comparison between Example 1 and Comparative Example 1, Example 2 and Comparative Example 2, and Example 12 and Comparative Example 3, it can be learned that in the embodiments of this application, under the condition that a specified type of gas reducer is provided for chemical consumption of gas produced, the battery cycling performance will be dramatically improved. It can be learned from comparison between Example 1 and Comparative Example 4 that the battery cycling performance will be dramatically improved by using a chemical consumption method of this application instead of a physical adsorption method.

According to Examples 20 to 22 and Comparative Examples 5 to 7, it can be learned that in the embodiments of this application, under the condition that a specified gas reducer is provided in a battery using the non-aqueous electrolyte system and different non-aqueous electrolytes are used, the gas reducer can chemically consume the gas produced by the battery and helps achieve good battery cycling performance.

From comparison between Example 1 and Comparative Example 1 and comparison between Examples 20 to 22 and Comparative Examples 5 to 7, it can be learned that after using a gas consuming medium, the battery using the ester-based electrolyte has a much better improvement on the cycling performance than the battery using the ether-based electrolyte or the sulfone-based electrolyte. This is because that a dominant component of gas produced by an ester-based electrolyte is CO² which is highly active in reaction with the alkali metal gas reducer, and therefore the cycling performance is improved more dramatically. Further, the battery using the fluoroester-based electrolyte has a much better improvement on the cycling performance than the battery using the ester-based electrolyte. This is because that a more stable surface passivation layer can be formed on the alkali metal gas reducer in the fluoroester-based electrolyte and the side reactions between the reducer and the electrolyte are reduced, thereby further dramatically improving the battery performance.

It can be learned from comparison between Example 1 and Examples 23 to 27 that in the embodiments of this application, under the condition that a specified gas reducer is provided in a battery using the non-aqueous electrolyte system, the molar ratio of the gas reducer to the solvent of the non-aqueous electrolyte greatly affects the battery cycling performance. The battery cycling performance is improved dramatically when the molar ratio is 1-10%, especially 3-5%. Under the condition that the molar ratio is lower than 1%, the improvement on the battery cycling performance is not obvious compared with that in the example in which the molar ratio is 1-10%. The reason is that the amount of the gas reducer is small when the molar ratio is relatively low and effects of absorbing the gas produced by the battery are limited. Under the condition that the molar ratio is higher than 10%, the battery cycling performance obviously decreases compared with that in the example in which the molar ratio is 1-10%. The reason is that under the condition that the molar ratio is excessively high, frequent side reactions will occur between a large amount of reducer and the electrolyte and result in extra loss of the electrolyte.

It can be learned from comparison between Example 1 and Examples 28 to 32 that in the embodiments of this application, under the condition that a specified gas reducer is provided in a battery using the non-aqueous electrolyte system, the specific surface area of the gas reducer is also closely related to the battery cycling performance. The battery cycling performance is improved dramatically when the specific surface area is 5-10m²/g, especially 20-50m²/g. Under the condition that the specific surface area is smaller than 5m²/g, the improvement on the battery cycling performance is not obvious compared with that in the example in which the specific surface area is 5-10m²/g. The reason is that the specific surface area of the gas reducer is excessively small and its active area for reaction is relatively small. This is not conducive to rapid absorption of the gas produced during battery cycling, and the passivated surface will further hinder the absorption of the reducer. Under the condition that the specific surface area is larger than 50m²/g, the battery cycling performance decreases compared with that in the example in which the specific surface area is 20-50m²/g, and especially under the condition that the specific surface area is larger than 100m²/g, the battery cycling performance decreases more obviously compared with that in the example in which the specific surface area is 20-50m²/g. The reason is that serious side reactions will occur between the gas reducer and the electrolyte because the specific surface area is excessively large. On the one hand, a larger amount of reducer will be consumed during surface passviation and the gas produced cannot be absorbed effectively. On the other hand, part of the electrolyte will also be consumed during the side reactions.

From comparison between Example 1 and Examples 33 to 35, it can be learned that in the embodiments of this application, under the condition that a specified gas reducer is provided in a battery using the non-aqueous electrolyte system, no matter which battery packaging type is used, the gas reducer can chemically consume the gas produced by the battery and helps achieve good battery cycling performance.

## Claims

1. A battery, comprising a battery housing, a positive electrode plate, a negative electrode plate, and a non-aqueous electrolyte, wherein a gas reducer is disposed inside the battery housing, the gas reducer comprises at least one of alkali metal and alkali metal alloy, and the gas reducer is in no contact with or in non-electrical contact with the negative electrode plate.

2. The battery according to claim 1, wherein an amount of substance of the gas reducer is 1-10% of an amount of substance of a solvent of the non-aqueous electrolyte, optionally 3-5%.

3. The battery according to claim 1 or 2, wherein a specific surface area of the gas reducer is 5-100m²/g, optionally 20-50m²/g.

4. The battery according to any one of claims 1 to 3, wherein the gas reducer is lithium metal or sodium metal.

5. The battery according to any one of claims 1 to 4, wherein the gas reducer is disposed on a positive electrode current collector of the positive electrode plate.

6. The battery according to any one of claims 1 to 5, wherein the positive electrode current collector of the positive electrode plate at an end of a battery cell has a first surface and a second surface that are opposite, a positive-electrode material is disposed on the first surface, and the gas reducer is disposed on the second surface.

7. The battery according to any one of claims 1 to 6, wherein the gas reducer is disposed on an inner wall of the battery housing.

8. The battery according to any one of claims 1 to 7, wherein the battery housing comprises a battery cell compartment and an air pocket compartment that communicate with each other, the positive electrode plate and the negative electrode plate are disposed in the battery cell compartment, and the gas reducer is disposed on the inner wall of the housing of the battery cell compartment and/or the inner wall of the housing of the air pocket compartment.

9. The battery according to any one of claims 1 to 8, wherein the gas reducer is sheet-shaped.

10. The battery according to any one of claims 1 to 9, wherein the battery is a pouch battery, a prismatic battery, a button battery, or a cylindrical battery.

11. The battery according to any one of claims 1 to 10, wherein the solvent of the non-aqueous electrolyte is a carbonate-based solvent, optionally a fluorocarbonate-based solvent.

12. The battery according to any one of claims 1 to 11, wherein the battery is a lithium-ion battery or a sodium-ion battery.

13. The battery according to any one of claims 1 to 12, wherein the positive-electrode material of the positive electrode plate is a ternary positive-electrode material, lithium iron phosphate, sodium iron phosphate, or lithium cobalt oxide, and/or a negative-electrode material of the negative electrode plate is lithium metal, sodium metal, or graphite.

14. The battery according to claim 13, wherein the positive-electrode material of the battery is lithium nickel cobalt manganate or lithium nickel cobalt aluminate, and the negative-electrode material of the battery is lithium metal.

15. An apparatus, provided with the battery according to any one of claims 1 to 14.

16. A method for curbing battery gassing, comprising: disposing a gas reducer inside a battery housing, wherein the gas reducer is in no contact with or in non-electrical contact with a negative electrode plate; and the gas reducer comprises at least one of alkali metal and alkali metal alloy.

17. The method according to claim 16, wherein a positive-electrode material is disposed on a first surface of a positive electrode current collector and the gas reducer is disposed on a second surface to obtain a positive electrode plate; and the positive electrode plate is disposed at an end of a battery cell.

18. The method according to claim 17, wherein the gas reducer is formed on the positive electrode current collector in a roll-pressing manner.
